# EUROPEAN PATENT APPLICATION

(11) **EP 3 079 228 A1**
(43) Date of publication of application: **12.10.2016**
(21) Application number: 16164178.2
(22) Date of filing: 07.04.2016
(51) Int. Cl.: H02K 1/14

(54) **A STATOR CORE, A STATOR AND A MOTOR**

(30) Priority: 07.04.2015 KR 20150049105
(71) Applicant: LG Innotek Co., Ltd., Seoul 04637 (KR)
(72) Inventor: SEO, Ja Young, 04637 SEOUL (KR)
(74) Representative: DREISS Patentanwälte PartG mbB

(57) **Abstract**

A stator core is provided, the stator core includes: a head part extended in a circumferential direction; a tooth inwardly extended from the head part; a first protruding part outwardly protruded from an outer circumferential surface of the head part; and a second protruding part outwardly protruded from an outer circumferential surface of the first protruding part.

## Description

### TECHNICAL FIELD

Exemplary embodiments of the present disclosure relate to a stator core, a stator and a motor.

### BACKGROUND

In general, an EPS (Electronic Power Steering) system is used in order to secure steering stability of a vehicle. In the EPS system, an ECU (Electronic Control Unit) drives a motor depending on driving conditions detected by a speed sensor, a torque angle sensor, a torque sensor, etc. Thereby, the EPS system can secure turning stability and rapid stability restoring force, such that the driver can drive a vehicle safely.

In the EPS system, a motor assists a torque of steering wheel operation by the driver, such that the driver can operate the steering wheel with less physical power. Here, the motor may be a BLDC (Brushless Direct Current) motor. Principal components of the BLDC motor are formed of a stator and a rotor, where a coil is wound on the stator and a magnet is coupled to the rotor, such that the rotor can rotate by a mutual electromagnetic interaction.

In particular, an important characteristic of the EPS motor is that the performance of the motor depends on how a friction torque can be reduced. The friction torque refers to a mechanical or frictional component generated during rotation of the motor.

### SUMMARY

### Technical Challenge

Therefore, an object of the present disclosure is to solve at least one or more of the above problems and/or disadvantages in whole or in part and to provide at least advantages described hereinafter.

In order to reduce the friction torque of the motor as described in the above, at least two stepped areas are provided herein, where the stepped areas are different from each other in their height. Thereby, the frictional torque can be reduced by reducing the frictional index, when a stator is installed in the housing.

### Technical Solution

In order to achieve at least the above objects, in whole or in part, and in accordance with the purposes of the present disclosure, as embodied and broadly described, and in a general aspect, there is provided a plurality of stator cores, the stator core comprising: a tooth protruded from a head part, wherein the plurality of stator cores may be adjacent to one another and coupled such that an outer circumferential surface of the head part may form a circular shape, wherein at least two stepped areas may be provided on the head part.

In some exemplary embodiments, a straight direction, from one end of the tooth to the outer circumferential surface of the head part, of the respective stepped area may be different from each other.

Furthermore, in another general aspect, there is provided a motor, the motor comprising: a motor housing; a stator including the plurality of stator cores, each including a tooth protruded from a head part; and a rotor rotatably installed at a center of the stator, and including a through-hole formed at a center and a magnet module, wherein at least two stepped areas may be provided at the head part of the stator core, where a straight distance of the respective stepped areas, from one end of the tooth to an outer circumferential surface of the head part, may be different from each other, and wherein any one of the at least two stepped areas may contact an inner circumferential surface of the motor housing.

In some exemplary embodiments, the stator core may include: a head part extended in a circumferential direction; a tooth inwardly extended from the head part; a first protruding part outwardly protruded from an outer circumferential surface of the head part ; and a second protruding part outwardly protruded from an outer circumferential surface of the first protruding part.

In some exemplary embodiments, the first protruding part may include: a first protrusion disposed in a first direction of the circumferential direction from the outer circumferential surface of the head part; and a second protrusion disposed in a second direction opposite to the first direction from the outer circumferential surface of the head part.

In some exemplary embodiments, the first protrusion and the second protrusion may form symmetry around a center of the head part.

In some exemplary embodiments, a length of the first protrusion in the circumferential direction may be longer than a length of the outer circumferential surface of the head part in the circumferential direction.

In some exemplary embodiment, the first protruding part may include an inclined part inclinedly connecting an outer circumferential surface of the head part and an outer circumferential surface of the first protruding part.

In some exemplary embodiment, the second protruding part may include: a third protrusion disposed in the first direction from the first protrusion; and a fourth protrusion disposed in the second direction from the second protrusion.

In some exemplary embodiments, the third protrusion and the fourth protrusion may form symmetry around a center of the head part.

In some exemplary embodiments, a length of the third protrusion in the circumferential direction may be longer than a length of the first protrusion in the circumferential direction, and shorter than a length of the outer circumferential surface of the head part in the circumferential direction.

In some exemplary embodiments, a length of the first protruding part outwardly protruded from the outer circumferential surface of the head part may be longer than a length of the second protruding part outwardly protruded from the outer circumferential surface of the first protruding part.

In some exemplary embodiments, a friction reducing pattern including a plurality of inwardly recessed grooves may be formed at least one of the outer circumferential surface of the head part and the outer circumferential surface of the first protruding part.

In some exemplary embodiments, the stator may comprise: a first stator core; and a second stator core couple to the first stator core in a circumferential direction, wherein the first stator core includes: a head part extended in a circumferential direction; a tooth inwardly extended from the head part; a first protruding part outwardly protruded from an outer circumferential surface of the head part; and a second protruding part outwardly protruded from an outer circumferential surface of the first protruding part.

In some exemplary embodiments, the first stator core and the second stator core may be integrally formed.

In some exemplary embodiments, the motor may comprise: a stator core including a head part extended in a circumferential direction, a tooth inwardly extended from the head part, a first protruding part outwardly protruded from an outer circumferential surface of the head part, and a second protruding part outwardly protruded from an outer circumferential surface of the first protruding part; and a housing internally accommodating the stator core, wherein an outer circumferential surface of the second protruding part has an inner contact with an inner circumferential surface of the housing.

### Advantageous Effect

According to an exemplary embodiment of the present disclosure, at least two stepped areas may be provided herein, where the stepped areas are different from each other in their height. Thereby, the frictional torque can be reduced by reducing the frictional index, when the stator is installed in the housing.

### BRIEF DESCRIPTION OF DRAWINGS

FIG. 1 is a plan view illustrating a stator core according to an exemplary embodiment of the present disclosure.
FIG. 2 is a conceptual view for describing a structure of FIG. 1
FIG. 3 is a plan view illustrating a stator according to an exemplary embodiment of the present disclosure.
FIG. 4 is a plan view illustrating a partial structure of a motor according to an exemplary embodiment of the present disclosure.
FIG. 5 is an enlarged perspective view illustrating by enlarging a part of a motor according to an exemplary embodiment of the present disclosure.
FIG. 6 is a graph illustrating a result of an experiment for reducing friction according to an exemplary embodiment of the present disclosure.
FIG. 7 is a sectional view illustrating a motor according to an exemplary embodiment of the present disclosure.

### DETAILED DESCRIPTION

Hereinafter, some exemplary embodiments of the present disclosure will be described in detail with reference to the enclosed figures. The same reference numerals will be assigned to the same or similar elements in the explanations of the figures. Thus, the redundant explanation and description of the same configuration may be omitted.

The terms including ordinal numbers such as "first" or "second" may be used for description of various elements. However, the elements shall not be limited by such the terms. The terms are used merely to distinguish a particular element from another element.

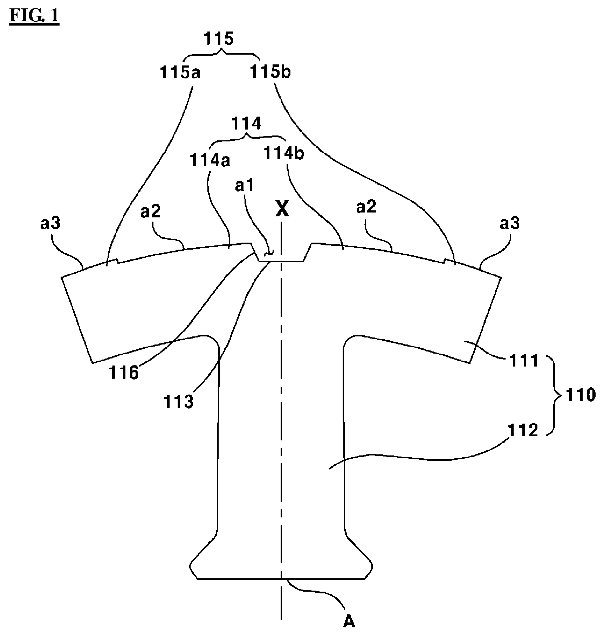

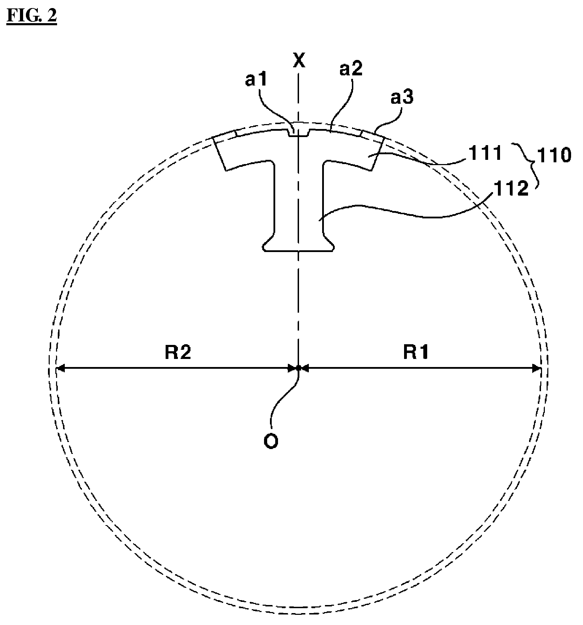

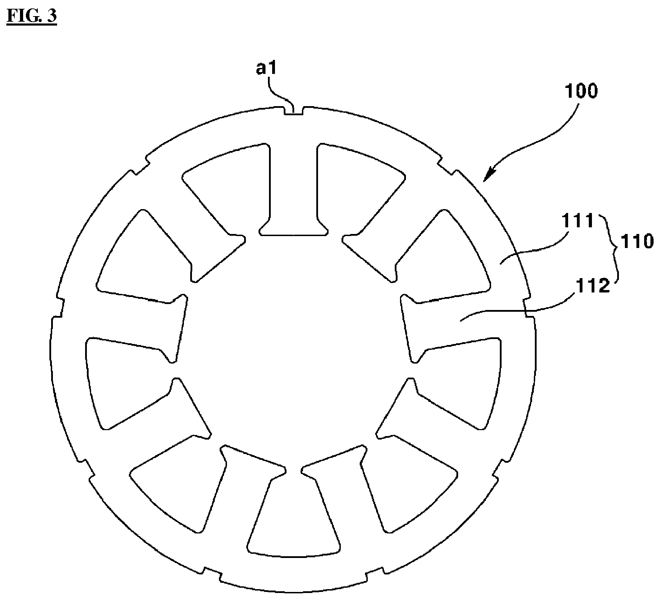

FIG. 1 is a plan view illustrating a stator core according to an exemplary embodiment of the present disclosure; FIG. 2 is a conceptual view for describing a structure of FIG. 1; and FIG. 3 is a plan view illustrating a stator according to an exemplary embodiment of the present disclosure.

The stator (100) according to an exemplary embodiment of the present disclosure may be formed by continuous coupling of a plurality of stator cores (110).

Referring to FIGS. 1 to 3, the stator (100) may include a plurality of stator cores (110) having a tooth (112) protruded from a head part (111). The plurality of stator cores (110) may be adjacent to one another, and may be coupled such that an outer circumferential surface of the head part (111) forms a circular shape. In particular, in this case, at least two stepped areas (a2, a3) may be provided at the head part (111) of the stator core (110), where a straight distance of the respective stepped areas (a2, a3), from an inner end of the tooth (112) to an outer circumferential surface of the head part (111), is different from each other.

As illustrated in FIG. 1, the stepped area (a2, a3) may be defined as an area each having a different straight distance measured from an inner end (A) to an outer circumferential surface of the head part (111) implementing a curved surface having a predetermined curvature.

In particular, each of the stepped areas (a2, a3) may implement an area of a structure having a predetermined curvature surface. Here, the area contacting a surface of the motor housing may be located higher than another area among the at least two stepped areas, and the lower stepped area may implement a separating area spaced apart from the motor housing, so as to reduce frictional area.

In an exemplary embodiment of the present disclosure, two of the stepped areas are implemented at the head part of the stator core. However, the present disclosure is not limited hereto. Therefore, greater number of stepped areas may be implemented at the stator core.

As illustrated in FIG.1, the stepped area (a2, a3) may include a first stepped area (a2) having a bidirectional first curvature surface at a center line (X), and a second stepped area (a3) extended from a distal end of the first stepped area (a2) and having a second curvature surface of which the straight distance is longer than that of the first stepped area (a2). Although in the present exemplary embodiment the height of the second stepped area (a3) is higher than that of the first stepped area (a2), conversely, the first stepped area (a2) may have a height (straight distance) higher than that of the second stepped area (a3).

Furthermore, a stepped groove (a1) formed in a direction to which the tooth (112) is provided may be additionally provided at a position where the center line (X) encounters the outer circumferential surface of the head part (111). The stepped groove (a1) may have a depth deeper than that of the first stepped area (a2).

Although it is not illustrated in the figures, a friction reducing pattern including a plurality of inwardly recessed grooves having a structure similar to that of the stepped groove (a1) may be formed at least one of an outer circumferential surface of the first stepped area (a2) and an outer circumferential surface of the second stepped area (a3). Thereby, frictional index of the surfaces can be further reduced.

As illustrated in FIG. 2, the stator core (110) having a structure as illustrated in FIG. 1 may implement a structure where a radius (R2) of a virtual circle is different from a radius (R1) of a virtual circle. Here, the radius (R2) refers to a radius of a virtual circle where the curvature surface of the first stepped area (a2) is extended, and the radius (R1) refers to a radius of a virtual circle where the curvature surface of the second stepped area (a3) is extended.

In particular, in the case that a plurality of the stator cores (110) is combined to form the stator (100) as illustrated in FIG. 3, an outer circumferential surface of the stator (100) may correspond to the virtual circle having the radius (R1) as illustrated in FIG. 2. That is, the second stepped areas (a3) of the adjacently arranged stator cores (110) may all have equal height and curvature, such that height deviation can be eliminated in the combined structure of a plurality of the stator cores (110). Thereby, the friction with the external housing can be reduced.

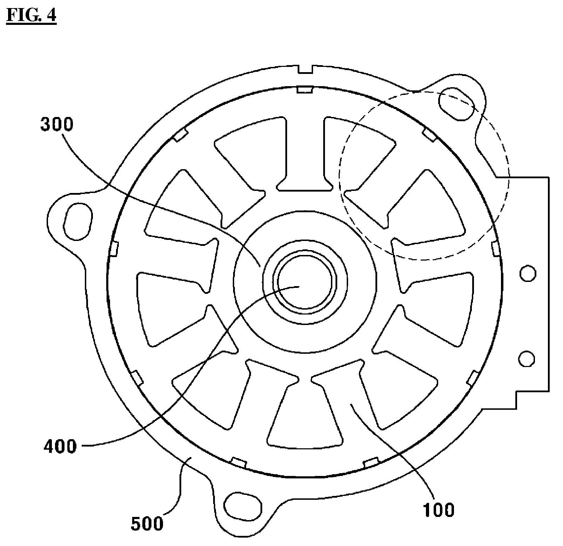

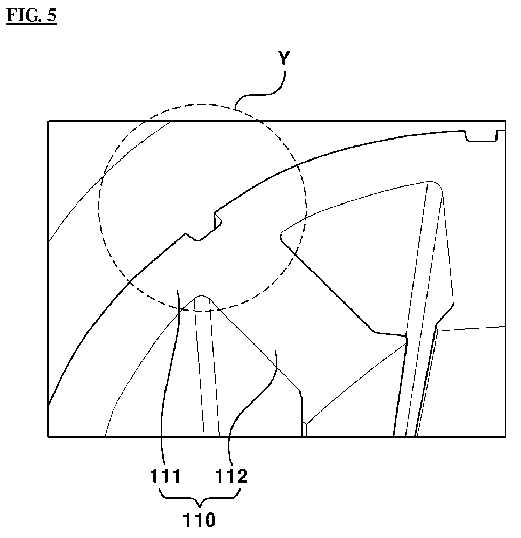

FIG. 4 is a plan view illustrating a partial structure of a motor according to an exemplary embodiment of the present disclosure; and FIG. 5 is an enlarged perspective view illustrating by enlarging a part of a motor according to an exemplary embodiment of the present disclosure.

As illustrated in FIGS. 4 and 5, when enlarging an contacting area (Y) between the stepped areas (a2, a3) and an inner surface of a housing (500) of a motor, it can be ascertained that a separating portion between the first stepped area (a2) and an inner surface of the housing (500) of the motor is implemented at the head part (111) of the stator core (110). The existence of such separating portion may reduce contacting area between the stator (100) and the housing (500) of the motor, such that the friction can be reduced on the whole.

The following TABLE 1 shows a result of friction torque comparison between an exemplary embodiment implementing the stepped areas (a2, a3) of the present disclosure and a comparative embodiment, under the condition that a stator core (110) of the same standard is provided. In this case, the first stepped area (a2) formed a 5 mm section in left and right directions on the basis of the center line (X). 30 rpm of driving power is equally applied in the experiment.

**{TABLE 1}**

| Friction Torque (30 rpm) | | | | |
|---|---|---|---|---|
| | Comparative Embodiment | | Exemplary Embodiment | |
| | CW | CCW | CW | CCW |
| #Sample 1 | 16.88 | 16.59 | 12.97 | 12.69 |
| #Sample 2 | 17.57 | 17.13 | 13.66 | 13.09 |
| #Sample 3 | 16.41 | 16.25 | 13.27 | 12.58 |
| AVE | 16.95 | 16.66 | 13.30 | 12.79 |

As it is ascertained from the result of TABLE 1, the friction torque can be reduced to a maximum of 25%, when the stator core (110) of the same standard employs the stepped areas (a2, a3) according to an exemplary embodiment of the present disclosure.

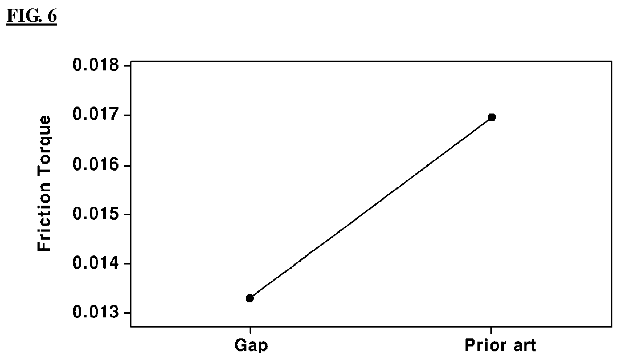

The result can be also ascertained in the graph illustrated in FIG. 6, where the friction torque is significantly reduced in the embodiment of the stepped area (Gap) according to the present disclosure, in comparison with the conventional product.

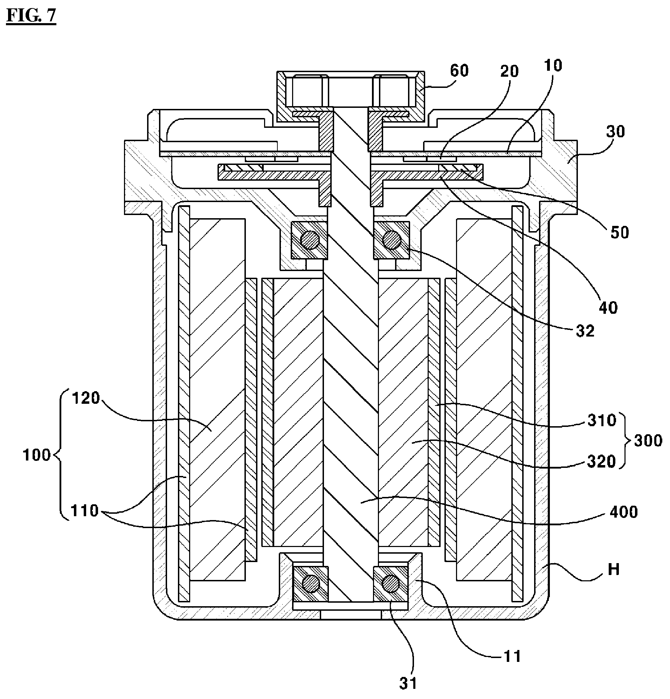

Hereinafter, an example of an EPS (Electronic Power Steering) motor employing the stator core for a motor according to an exemplary embodiment of the present disclosure will be described, with reference to FIG. 7. However, it will be apparent that the stator core (110) according to the exemplary embodiment may be applied to various types of motor. In the present exemplary embodiment, an EPS motor is described as an example.

Referring to FIG. 7, a motor housing (500) and a bracket (30) coupled to the housing (500) may be provided. An upper surface of the housing (500) may be opened, and a support pipe (11) may be protruded from a center of a lower surface of the housing (500). A first bearing (31) may be installed at the support pipe (11), and a second bearing (32) may be installed at the bracket (30). A shaft (400) may contact and support the first bearing (31) and the second bearing (32). An upper portion of the shaft (400) may be supported by the second bearing (32), and a lower portion of the shaft (400) may be supported by the first bearing (31).

An upper end of the shaft (400) may be upwardly protruded by penetrating through the bracket (30), and may be combined with instruments (60) connected to a steering shaft (not illustrated). A stator (100) and a rotor (300) may be installed inside of the housing (500). The rotor (300) may include a rotor core (320) coupled to the shaft (400), and a magnet (310) coupled to an outer circumferential surface of the rotor core (320). Although a structure where the magnet (310) is coupled to an outer circumferential surface of the rotor core (320) is suggested in the present exemplary embodiment, alternatively, another structure where the magnet (310) is inserted in the rotor core (320) may also be applied. In addition the stator (100) may include a stator core (110) arranged between the magnet (310) and the housing (110), and a coil (120) wound on the stator core (110).

In this case, the stepped areas (a2, a3) as previously described in FIGS. 1 to 5 may be applied to the stator core (110) composing the stator (100). In the structure as described in the forgoing, the shaft (400) may rotate by interaction between a magnetic field generated from the stator (100) and a magnetic field generated from the rotor (300).

Meanwhile, a sensing plate (40) may be coupled to the shaft (400) to rotate with the shaft (400), and a sensing magnet (50) may be installed at the sensing plate (40). In addition, a circuit board (10) may be installed at the bracket (30), and a sensing element (20) facing the sensing magnet (50) may be installed at the circuit board (10). The sensing element (20) may sense a rotation extent of the sensing magnet (50), so as to sense rotation extents of the sensing plate (40) couple with the sensing magnet (50) and the shaft (400).

According to some exemplary embodiments of the present disclosure, the stator core (110) may include a head part (111), a tooth (112), a first protruding part (114), and a second protruding part (115).

According to some exemplary embodiments of the present disclosure, the stator core (110) may include a head part (111) extended in a circumferential direction.

According to some exemplary embodiments of the present disclosure, the stator core (110) may include a tooth (112) inwardly extended from the head part (111).

According to some exemplary embodiments of the present disclosure, the stator core (110) may include a first protruding part (114) outwardly protruded from an outer circumferential surface (113) of the head part (111).

According to some exemplary embodiments of the present disclosure, the stator core (110) may include a second protruding part (115) outwardly protruded from an outer circumferential surface of the first protruding part (114).

The first protruding part (114) may include a first protrusion (114a) and a second protrusion (114b). The first protruding part (114) may include: a first protrusion (114a) disposed in a first direction of the circumferential direction from the outer circumferential surface (113) of the head part (111); and a second protrusion (114b) disposed in a second direction opposite to the first direction from the outer circumferential surface (113) of the head part (111).

Here, the first protrusion (114a) and the second protrusion (114b) may form symmetry around a center of the head part (111). In addition, a length of the first protrusion (114a) in the circumferential direction may be longer than a length of the outer circumferential surface (113) of the head part (111) in the circumferential direction.

The first protruding part (114) may include an inclined part (116) inclinedly connecting an outer circumferential surface (113) of the head part (111) and an outer circumferential surface of the first protruding part (114).

The second protruding part (115) may include a third protrusion (115a) and a fourth protrusion (115b). The second protruding part (115) may include: a third protrusion (115a) disposed in the first direction from the first protrusion (114a); and a fourth protrusion (115b) disposed in the second direction from the second protrusion (114b). Here, the third protrusion (115a) and the fourth protrusion (114b) may form symmetry around a center of the head part (111). A length of the third protrusion (115a) in the circumferential direction may be longer than a length of the first protrusion (114a) in the circumferential direction and shorter than a length of the outer circumferential surface (113) of the head part (111) in the circumferential direction.

According to some exemplary embodiments of the present disclosure, a length of the first protruding part (114) outwardly protruded from the outer circumferential surface (113) of the head part (111) may be longer than a length of the second protruding part (115) outwardly protruded from the outer circumferential surface of the first protruding part (114).

According to some exemplary embodiments of the present disclosure, a friction reducing pattern (not illustrated) including a plurality of inwardly recessed grooves may be formed at least one of the outer circumferential surface (113) of the head part (111) and the outer circumferential surface of the first protruding part (114).

According to some exemplary embodiments of the present disclosure, the stator (100) may be formed by a structure where a plurality of the stator cores (110) is arranged in a circumferential direction. Here, the plurality of the stator cores (110) may be integrally formed.

The motor according to some exemplary embodiment of the present disclosure may include the stator (100), and the housing (500) internally accommodating the stator (100). Here, an outer circumferential surface of the second protruding part (115) may have an inner contact with an inner circumferential surface of the housing (500).

In the present exemplary embodiment herein, an external diameter of the 5 mm sections at both sides is reduced such that an area contacting the housing (500) can be reduced to form an air gap. In particular, in the present exemplary embodiment, a plurality of the stator cores (110) is gathered and assembled by being indented with the housing (500), such that only eighteen sections contact the housing (500) and the rest sections form air gaps to reduce the friction torque. That is, in the present exemplary embodiment, the air gaps between the housing (500) and the stator (100) are obtained to reduce the friction torque.

The abovementioned exemplary embodiments are intended to be illustrative, and not to limit the scope of the claims. Many alternatives, modifications, variations, and equivalents will be apparent to those skilled in the art. The features, structures, methods, and other characteristics of the exemplary embodiments described herein may be combined in various ways to obtain additional and/or alternative exemplary embodiments within an equivalent scope. Therefore, the technical scope of the rights for the present disclosure shall be decided by the appended claims and equivalents thereof.

## Claims

1. A stator core, the stator core comprising:
a head part (111) extended in a circumferential direction;
a tooth (112) inwardly extended from the head part (111);
a first protruding part (114) outwardly protruded from an outer circumferential surface (113) of the head part (111); and
a second protruding part (115) outwardly protruded from an outer circumferential surface of the first protruding part (114).

2. The stator core of claim 1, wherein the first protruding part (114) includes:
a first protrusion (114a) disposed in a first direction of the circumferential direction from the outer circumferential surface (113) of the head part (111); and
a second protrusion (114b) disposed in a second direction opposite to the first direction from the outer circumferential surface (113) of the head part (111).

3. The stator core of claim 2, wherein the first protrusion (114a) and the second protrusion (114b) forms symmetry around a center of the head part (111).

4. The stator core of claim 2, wherein a length of the first protrusion (114a) in the circumferential direction is longer than a length of the outer circumferential surface (113) of the head part (111) in the circumferential direction.

5. The stator core of claim 1, wherein the first protruding part (114) includes an inclined part (116) inclinedly connecting an outer circumferential surface (113) of the head part (111) and an outer circumferential surface of the first protruding part (114).

6. The stator core of claim 2, wherein the second protruding part (115) includes:
a third protrusion (115a) disposed in the first direction from the first protrusion (114a); and
a fourth protrusion (115b) disposed in the second direction from the second protrusion (114b).

7. The stator core of claim 6, wherein the third protrusion (115a) and the fourth protrusion (114b) forms symmetry around a center of the head part (111).

8. The stator core of claim 6, wherein a length of the third protrusion (115a) in the circumferential direction is longer than a length of the first protrusion (114a) in the circumferential direction and shorter than a length of the outer circumferential surface (113) of the head part (111) in the circumferential direction.

9. The stator core of claim 1, wherein a length of the first protruding part (114) outwardly protruded from the outer circumferential surface (113) of the head part (111) is longer than a length of the second protruding part (115) outwardly protruded from the outer circumferential surface of the first protruding part (114).

10. The stator core of claim 1, a friction reducing pattern including a plurality of inwardly recessed grooves is formed at least one of the outer circumferential surface (113) of the head part (111) and the outer circumferential surface of the first protruding part (114).

11. A stator comprising a plurality of the stator cores (110) of claim 1 arranged in a circumferential direction.

12. The stator of claim 11, wherein the plurality of the stator cores (110) is integrally formed.

13. A motor comprising:
the stator (100) of claim 11; and
a housing (500) internally accommodating the stator (100), wherein an outer circumferential surface of the second protruding part (115) has an inner contact with an inner circumferential surface of the housing (500).
